(19) **Europäisches Patentamt / European Patent Office / Office européen des brevets**

(11) **EP 2 103 057 B1**

(12) **FASCICULE DE BREVET EUROPEEN**

(45) Date de publication et mention
de la délivrance du brevet:
**30.11.2016 Bulletin 2016/48**

(21) Numéro de dépôt: **07858050.3**

(22) Date de dépôt: **21.12.2007**

(51) Int Cl.:
*H04L 12/701* (2013.01)    *H04L 12/721* (2013.01)
*H04L 12/707* (2013.01)

(86) Numéro de dépôt international:
**PCT/EP2007/064438**

(87) Numéro de publication internationale:
**WO 2008/077936 (03.07.2008 Gazette 2008/27)**

(54) **PROCEDE DE ROUTAGE DANS UN RESEAU A CONNECTIVITE INTERMITTENTE**

FÜR MIT UNTERBRECHUNGEN VERBUNDENE NETZE BESTIMMTES ROUTING-VERFAHREN

ROUTING METHOD INTENDED FOR INTERMITTENTLY CONNECTED NETWORKS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611258**

(43) Date de publication de la demande:
**23.09.2009 Bulletin 2009/39**

(73) Titulaire: **THALES**
**92400 Courbevoie (FR)**

(72) Inventeurs:
- **CONAN, Vania**
  **F-75005 Paris (FR)**
- **LEGUAY, Jérémie**
  **F-75005 Paris (FR)**
- **FRIEDMAN, Timur**
  **75010 Paris (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2001 036 810**

- **EVAN P. C. JONES, LILY LI, PAUL A. S. WARD: "Practical Routing in Delay-Tolerant Networks" INTERNET ARTICLE, [Online] 22 août 2005 (2005-08-22), - 26 août 2005 (2005-08-26) pages 1-7, XP002442665 Extrait de l'Internet: URL:http://www.sigcomm.org/sigcomm2005/pa p er-JonLi.pdf> [extrait le 2007-07-12]**
- **LINDGREN A DORIA LULEA UNIVERSITY OF TECHNOLOGY A: "Probabilistic Routing Protocol for Intermittently Connected Networks" IETF STANDARD-WORKING-DRAFT, INTERNET ENGINEERING TASK FORCE, IETF, CH, 9 juin 2005 (2005-06-09), XP015040438 ISSN: 0000-0004 cité dans la demande**
- **JAIN S ET AL: "ROUTING IN A DELAY TOLERANT NETWORK" COMPUTER COMMUNICATION REVIEW, ACM, NEW YORK, NY, US, vol. 34, no. 4, octobre 2004 (2004-10), pages 145-157, XP001224045 ISSN: 0146-4833 cité dans la demande**
- **RAHUL C SHAH ET AL: "Modeling and Analysis of Opportunistic Routing in Low Traffic Scenarios" MODELING AND OPTIMIZATION IN MOBILE, AD HOC, AND WIRELESS NETWORKS, 2005. WIOPT 2005. THIRD INTERNATIONAL SYMPOSIUM ON RIVA DEL GARDA, TRENTINO, ITALY 04-06 APRIL 2005, PISCATAWAY, NJ, USA,IEEE, 4 avril 2005 (2005-04-04), pages 294-304, XP010789186 ISBN: 0-7695-2267-X**
- **BISWAS S ET AL: "OPPORTUNISTIC ROUTING IN MULTI-HOP WIRELESS NETWORKS" COMPUTER COMMUNICATION REVIEW, ACM, NEW YORK, NY, US, vol. 34, no. 1, janvier 2004 (2004-01), pages 69-74, XP001223364 ISSN: 0146-4833**

**EP 2 103 057 B1**

- GROSSGLAUSER M ET AL: "Mobility increases the capacity of ad-hoc wireless networks" PROCEEDINGS IEEE INFOCOM 2001. THE CONFERENCE ON COMPUTER COMMUNICATIONS. 20TH. ANNUAL JOINT CONFERENCE OF THE IEEE COMPUTER ANDCOMMUNICATIONS SOCIETIES. ANCHORAGE, AK, APRIL 22 - 26, 2001, PROCEEDINGS IEEE INFOCOM. THE CONFERENCE ON COMPUTER COMMUNI, vol. VOL. 1 OF 3. CONF. 20, 22 avril 2001 (2001-04-22), pages 1360-1369, XP010538827 ISBN: 0-7803-7016-3

**EP 2 103 057 B1**

## Description

L'invention concerne, notamment, un procédé de routage dans des réseaux où la connectivité est intermittente.

Par connectivité intermittente, sont désignés tous les réseaux dans lesquels des utilisateurs, des ressources, des adresses IP (Internet Protocol) ou tout autre type d'objet, sont connectés de manière intermittente, non continue dans le temps. Ceci peut aussi recouper la notion de connectivité instable où l'on observe des ruptures dans le mécanisme de connexion.

Elle concerne, notamment, un procédé et un système permettant de générer des informations utiles pour le routage de messages au sein d'un réseau constitué de noeuds qui sont en liaison entre eux, les liens entre les noeuds pouvant être interrompus de manière intermittente.

Dans la suite de la description, on entend sous l'expression « acheminement défini de façon opportuniste » un acheminement pour lequel, quand un noeud A entre en contact avec un noeud B, les informations de routage permettent de décider quels messages A doit remettre à B.

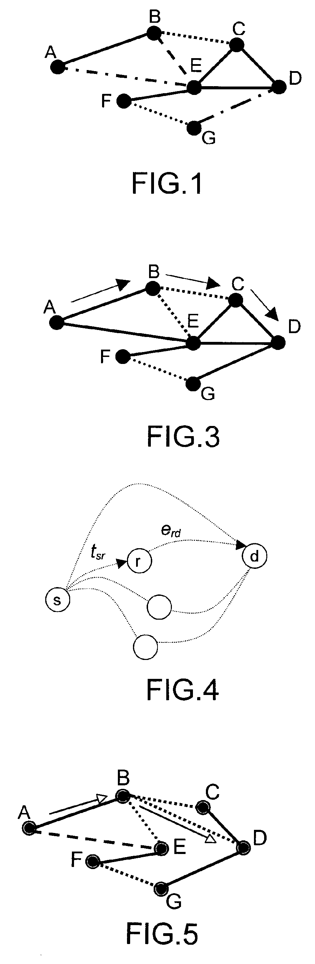

Les réseaux où la connectivité est intermittente sont caractérisés par le fait que de nombreux liens subissent de forts taux de perte, ou bien de longs délais de propagation, conduisant ainsi au partitionnement, fractionnement du réseau en plusieurs parties, à l'intérieur desquelles les transmissions sont bonnes. Ainsi, les modes de communications usuels (par exemple le protocole TCP transport communication protocol) s'appuyant sur l'existence de chemins de bout en bout, échouent. La problématique du routage de l'information, est donc de fournir un procédé permettant à un message d'être acheminé d'une source vers une destination dans ce contexte. Sur la figure 1 est représenté un exemple de « graphe de connectivité » pour le type de réseaux pour lesquels s'applique le procédé selon l'invention. Les noeuds A, B, C, D et E, du graphe représentent les entités communicantes et les arêtes [A, B], [B, C].....correspondent au niveau de connectivité entres les noeuds. Plus la fréquence des pointillés d'une arête est haute, moins les noeuds sont connectés entre eux. Sur ce graphe, il est possible de voir, alors que A et B sont connectés en permanence, A et F ne sont jamais connectés et B et E sont connectés par intermittence. Un graphe de connectivité est, en général, représenté par un paramètre L, la largeur du graphe, un nombre n de noeuds et le degré moyen du graphe D.

Ces réseaux sont, par exemple, des réseaux communément appelés Réseaux Tolérants aux Délais (RTD, en anglais DTN ou Delay Tolerant Network). Les RTDs sont composés d'entités ou noeuds, qui sont communicantes (communiquant entre elles), mobiles et sans fil. Ces unités sont, par exemple, des ordinateurs personnels ou PDA (abrégé anglo-saxon de Personnal Data Assistant), des téléphones cellulaires, des capteurs, etc. A tout instant, la communication n'est possible qu'entre les noeuds qui se trouvent en portée radio et, du fait du très faible niveau de connectivité, la probabilité qu'existe un chemin de bout en bout (chemin de routage existant et ininterrompu) entre deux entités données est quasiment nulle. Le relayage de paquets de données ne pouvant se faire avec les mécanismes classiques de routage IP (Internet Protocol), le relayage se base alors sur le principe de stockage et transmission (connu sous l'expression anglo-saxonne store and forward). Lorsqu'une entité reçoit un message à transmettre, elle le conserve jusqu'à ce qu'elle rencontre le destinataire ou bien, elle le transmet de manière opportuniste à un relais qui peut être choisi en fonction d'une stratégie particulière.

Les réseaux ad hoc à destination, des forces d'intervention d'urgence des pompiers, de la police, par exemple, ou utilisés pour les communications militaires peuvent aussi changer leur mode de communication en conditions normales (protocoles du type MANET technologie système autonome de noeuds mobiles Mobile Ad hoc Networking) pour un mode « déconnecté ». Les déconnections dans ces réseaux proviennent de la mobilité de noeuds, de problèmes liés à la radio, ou de la disparition de noeuds (manque de batteries, destruction...). L'invention décrite dans ce document peut s'appliquer dans ce contexte afin de maintenir un service « best-effort » d'acheminement des messages.

Différentes méthodes de routage pour ce type de réseaux sont connues de l'art antérieur.

Les documents de A. Lindgren, A. Doria, and O. Schelen, "Probabilistic routing in intermittently connected networks," in Proc. SAPIR, 2004 et J. Burgess, B. Gallagher, D. Jensen, and B. N. Levine, "MaxProp: Routing for Vehicle-Based Disruption-Tolerant Networks" in Proc. Infocom, 2006 décrivent des procédés de routage reposant sur des approches probabilistes. De telles approches ne se basent pas sur l'espérance des temps d'inter-contacts entre les noeuds. Il est donc difficile d'estimer le délai pour atteindre une destination. De plus, elles ont une mémoire à plus ou moins long terme en fonction de facteurs d'échelles qui sont difficiles à estimer.

Dans le document de S. Jain, K. Fall, and R. Prata, "Routing in a Delay Tolerant Network" in Proc. SigComm2004, la méthode calcule « des plus courts chemins » dans un graphe valué (graphe dans lequel des poids sont attribués aux arêtes) avec les délais moyens d'inter-contacts entre les noeuds. Cette approche souffre d'un manque d'opportunisme dans les possibilités de transmission qu'elle met en oeuvre et définit de manière trop stricte la séquence des relais qui doivent être utilisés. Calculer des plus courts chemins en minimisant la somme des délais des arêtes du graphe traversées ne conduit pas à un chemin de routage performant. Une autre méthode de routage est présentée dans le document XP002442665, "Practical Routing in Delay-Tolerant Networks".

Dans le document de V. Conan, J. Leguay. T. Friedman, "The heterogeneity of inter-contact time distributions : its importance for routing in delay tolerant networks", arxiv:cs.NI/0609068, on applique l'algorithme « Spray and Wait » introduit par M. Grossglauser and D. Tse, "Mobility increases the capacity of ad-hoc wireless networks", Transactions on Networking, vol.10 no. 4, pp. 477-486, August 2002. Ceci permet de traiter uniquement le cas de noeuds atteignables en deux sauts et non à un nombre quelconque de sauts. Le taux de livraison du message est, par conséquent, faible et le délai plus important qu'en mettant en oeuvre le procédé selon l'invention. De plus, l'algorithme d'optimisation permettant de trouver la solution est en temps exponentiel, une solution sous-optimale est donc proposée.

Malgré les performances des procédés de l'art antérieur, ces derniers ne permettent pas de fournir une méthode de routage minimisant les délais de livraison à l'échelle d'un réseau entier.

L'objet de l'invention repose sur la mise en oeuvre d'un procédé multi-sauts pour le transport des messages. Un message peut être relayé successivement par plusieurs noeuds avant d'atteindre sa destination.

L'invention concerne un procédé de routage dans un réseau à connectivité intermittente caractérisé en ce qu'il comporte, pour déterminer les informations de routage, pour un acheminement défini de façon opportuniste, au moins les étapes suivantes :

pour un réseau comprenant un nombre n de noeuds, kmax étant le nombre de relais maximum à considérer dans l'acheminement, et $M_1$, une matrice de taille nxn

    ∘ on initialise $M_1 = <t_{ij}>$ les estimations des temps moyens d'inter-contacts pour les noeuds i et j,

    ∘ k+1 correspond au nombre de relais considérés pour le routage, initialiser k=0, et

Faire à l'étape k :

Pour chaque paire de noeuds (i,j) (avec 1<=i<=n, 1<=j<=n, i≠j),

    ∘ estimer le délai à (k+1) sauts et la liste des relais correspondants à partir de $<\lambda_{ij}>$ matrice des inverses des temps moyens d'inter-contacts et des estimations de délais à k sauts présents dans $M_k$,
    ∘ stocker les délais d'inter-contacts estimés dans la matrice $M_{(k+1)}(i, j)$ et la liste des relais $V_i(d)^{k+1}$ correspondants, $(M_{(k+1)}(i, j), V_i(d)^{k+1})$ où $V_i(d)^{k+1}$ correspond à la liste des noeuds relais considérés au noeud i lorsqu'un message doit être transmis vers la destination d, pour un nombre de relais k+1,

        ∘ Si k+1 = kmax, arrêter les étapes,

        ∘ Si non, faire k=k+1.

Ainsi l'acheminement d'un message à destination du noeud d, qu'il soit émis ou relayé par le noeud i, s'effectue en transférant le message aux noeuds appartenant à $V_i(d)^{kmax}$.

Selon un mode de réalisation, on arrête les étapes pour $M_k = M_{k+1}$.

Le procédé peut comporter au moins les étapes suivantes :

    ∘ pour une destination d, considérer la liste des temps moyens $<e_{l, d}>$ estimés à l'étape k dans $M_k$, l variant de 1 à n,

    ∘ effectuer un tri croissant des valeurs de ces temps moyens, $L = e_{L1, d} < e_{L2, d} < ... < e_{Ln, d}$, où L correspond à une liste en ordre croissant,

    ∘ pour un noeud source s, définir l'ensemble des noeuds / des relais à trouver, initialiser cet ensemble $/ = \phi$,

    ∘ soit Result la valeur correspondant à l'estimation du délai entre s et d avec le meilleur ensemble / trouvé, à l'initialisation, $Result = 1/\lambda_{sd}$.

Pour chaque noeud $L_l$ de la liste L, l variant de 1 à n :

Si le noeud s voit le noeud $L_l$, et si le noeud $L_l$ voit la destination ($\lambda_{s,Ll} \neq 0$ et $1/e_{Ll,d} \neq 0$), ajouter le noeud $L_l$ à l'ensemble / et tester la nouvelle valeur du délai avec cet ensemble / en utilisant

$$E_{sd}(I) = \frac{1 + \sum_{i \in I} \lambda_{si} e_{id}}{\lambda_{sd} + \sum_{i \in I} \lambda_{si}} \, ,$$

correspondant au délai que l'on peut espérer entre s et d en utilisant l'ensemble de relais / au noeud s.

Si $E_{sd}(/)$ > Result alors :

retirer le noeud $L_l$ de l'ensemble / et arrêter le déroulement des étapes, / est égal à l'ensemble optimal.

Sinon,

Faire Result = $E_{sd}(/)$, accepter le noeud dans l'ensemble /, et la valeur de délai devient la valeur minimale courante, stocker la valeur Result dans $M_{k+1}(s,d)$ et l'ensemble / dans $V_s(d)^{k+1}$.

Return Result.

L'invention concerne aussi un système de routage permettant d'obtenir des informations de routage caractérisé en ce qu'il comporte un ou plusieurs noeuds comportant au moins les éléments suivants :

  ◦ un module de gestion de l'historique,

  ◦ un module réception de messages de données, comprenant une mémoire tampon,

  ◦ un module de décision de réexpédition adapté à décider des messages qui sont transférés à un noeud lorsqu'il rentre en contact,

  ◦ un module de réexpédition adapté à assurer le transfert des messages vers les voisins,

  ◦ un module de calcul des informations de routage adapté à exécuter les étapes du procédé décrit ci-avant,

  ◦ un module d'éligibilité participant aux décisions de réexpédition prises dans le module de décision de réexpédition.

Le procédé selon l'invention présente notamment les avantages suivants :

  ◦ le transport des messages peut être à copie unique, ou à copies multiples ; une ou plusieurs copies du message peuvent exister à chaque instant dans le réseau,

  ◦ le procédé est décentralisé : chaque noeud choisit indépendamment des autres, les relais permettant de transmettre le message ou les données d'un noeud source vers un noeud destinataire,

  ◦ le choix optimal des relais est effectué de manière dépendante, il est obtenu comme le point fixe d'une suite convergente qui converge en un nombre d'étapes, par exemple, au plus égal au diamètre du graphe d'inter-connexion,

  ◦ la solution permet de minimiser le délai de livraison tout en gardant une complexité faible, la complexité dans le pire des cas est évaluée à : $L*n^2*D$, avec L la largeur du graphe de connectivité, n le nombre de noeuds et D le degré moyen du graphe, le graphe de connectivité ayant le plus souvent des propriétés « petit monde », la complexité réelle est alors réduite. L devient alors log(n) et D « n. L'algorithme mis en oeuvre converge avec la largeur du graphe,

  ◦ La solution fournit un routage sans-boucles, c'est à dire qu'un message ne passe pas deux fois par le même noeud.

D'autres caractéristiques et avantages de la présente invention apparaîtront mieux à la lecture de la description qui suit, donnée à titre illustratif et nullement limitatif, annexée des figures qui représentent :

  ◦ La figure 1 un exemple de réseau à connectivité intermittente selon l'art antérieur,

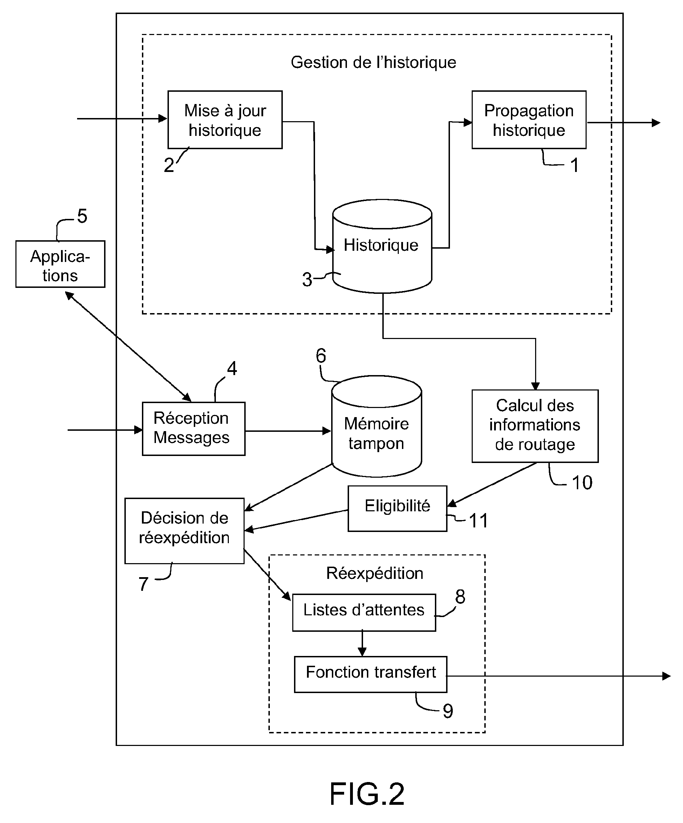

  ◦ La figure 2 un exemple d'architecture fonctionnelle d'un noeud sur lequel sont exécutées les étapes du procédé selon l'invention,

  ◦ La figure 3, un schéma de transfert de message au sein d'un réseau à connectivité intermittente,

∘ La figure 4, une illustration de la méthode de calculs à deux sauts, selon l'invention,

∘ La figure 5, un exemple de transfert d'un noeud A vers un autre noeud en deux sauts uniquement.

Afin de mieux faire comprendre le procédé selon l'invention, la description qui suit est donnée à titre illustratif et nullement limitatif dans le cadre d'un réseau où le transport des messages s'effectue avec une copie unique. Le réseau peut être un réseau RTD, qui est composé d'entités communicantes mobiles et sans-fil comme des téléphones cellulaires, des capteurs ou encore des PDA.

Les données sont transmises ou acheminées, dans ce type de réseau, sous la forme de messages (connu sous la dénomination anglo-saxonne bundle) contenant de l'information auto-suffisante qui est transférée d'entités en entités, de manière atomique, en utilisant par exemple le protocole TCP.

Le procédé peut être implémenté sous une forme logicielle (éventuellement logiciel embarqué), dans une pile de routage « applicatif » ou de surcouche « overlay » au niveau d'un noeud. Elle peut aussi être développée sous une forme matérielle ou « hardware ».

Dans le réseau, chacun des noeuds est pourvu d'un processeur adapté à mettre en oeuvre les fonctions élémentaires suivantes, décrites en relation à la figure 2 :

Module Propagation de l'historique, 1: un noeud propage régulièrement les temps d'inter-contacts moyens qu'il mesure. Cela peut être réalisé périodiquement ou être déclenché de manière opportuniste selon des méthodes connues de l'Homme du métier. Les noeuds peuvent décider pour diverses raisons (e.g. économie d'énergie, consommation de ressources réseaux, complexité de calcul) de diffuser partiellement cette information.

Module Mise à jour de l'historique global, 2 : Chaque noeud reçoit les informations d'historique des autres noeuds du réseau et les stocke dans une structure de donnée pouvant être une matrice 2x2, 3, où une valeur à la ligne i et la colonne j correspond au temps d'inter-contact moyen tij entre les noeuds i et j. Cette matrice est mise à jour lors de la réception d'informations nouvelles provenant d'autres noeuds, noeuds en relation ou noeuds plus éloignés, les informations étant alors relayées.

Module Réception de messages de données, 4 : Cette fonction est appelée par le processeur lorsqu'un message contenant des données est reçu par un noeud. Si le message est destiné au noeud courant, il est alors transféré aux applications concernées, 5 (on peut avoir un client mail par exemple) Dans le cas contraire, le noeud courant stocke celui-ci dans une mémoire tampon 6 afin de le transférer ultérieurement.

Module de Décision de réexpédition, 7 : Cette fonction est invoquée lorsqu'un nouveau noeud entre dans le voisinage d'un noeud (c'est-à-dire à chaque nouveau contact). Elle a pour but de décider des messages à transférer vers le noeud N. Pour chaque message M à destination du noeud $d_M$ n'étant pas déjà programmé pour transfert vers le voisin N, on vérifie deux choses :

- Que le noeud N ne possède pas déjà M.

- Que M est « éligible » par rapport au noeud N. La notion d'éligibilité est explicitée dans le détail de la fonction « éligibilité d'un noeud », cette fonction statuant sur celle-ci.

Si c'est deux conditions sont vraies, le message M est alors mis en liste d'attente 8 pour un transfert futur vers N.

Module Transfert des messages, 9 : Cette fonction transfère les messages présents dans la liste d'attente 8 du noeud rencontré. Notons qu'il existe une liste d'attente par noeud étant en contact avec le noeud courant et que celle-ci est remise à zéro lorsque les noeuds ne sont plus en contact ou quand tous les messages ont été transmis.

Calcul des informations de routage, 10 : Dans le cadre d'un processus de routage, lorsque cette fonction est invoquée périodiquement. Ainsi, le noeud *i* construit, pour chaque noeud destination d, à partir de la matrice des temps d'inter-contacts, un sous-ensemble de noeuds $V_i(d)$.

Eligibilité d'un noeud, 11 : Afin de statuer sur l'éligibilité d'un noeud relais ren contact, à un instant t donné, avec le noeud courant. Pour un message destiné au noeud d, cette fonction vérifie si *r* est présent dans l'ensemble $V_i(d)$. Si cette vérification est vraie, le noeud r est déclaré éligible, sinon il est déclaré non éligible.

La figure 3 représente un exemple de routage d'un message d'un premier noeud A vers un deuxième noeud D. Dans cet exemple, on a les notations suivantes :

∘ $V_A(D)= \{B\}$ ; A transmet le message à B,

◦ $V_B(D) = \{C,E\}$ ; correspond à l'ensemble des noeuds éligibles par B. C'est-à-dire que B pouvait transmettre le message à C ou E, mais il le transmet à C car c'est le premier qu'il rencontre,

◦ $V_C(D) = \{D\}$ ; C transmet le message à D Ainsi, de proche en proche, et en passant par les relais B et C, le message émis par le noeud 1 A est transmis au noeud D .

L'un des objectifs de la présente invention consiste à définir, pour chaque noeud i, jouant le rôle d'un relais d'un message ou bien le rôle d'une source émettrice de messages ou de données, et pour tout noeud destinataire d, l'ensemble des voisins éligibles $V_i(d)$ qui sont utilisés pour le transfert des messages à destination de d.

Les étapes du procédé permettant le transport des données ou des messages en minimisant le délai sont détaillées ci-après.

Pour déterminer l'ensemble des noeuds éligibles, le procédé exécute, par exemple, les étapes décrites ci-après :

### Algorithme principal

*Pré-requis :* Chaque noeud *i* possède la connaissance de la matrice $<\lambda_{ij}>$, de taille *nxn* (*n* étant le nombre de noeuds) correspondant aux inverses des temps moyens d'inter-contact entre les noeuds *i* et *j*. Cette matrice est calculée, par exemple, à partir de la matrice contenant les $<t_{ij}>$ correspondant aux temps d'inter-contact moyens entre les noeuds *i* et *j*. Ces matrices restent inchangées pendant le calcul. Ces matrices peuvent être calculées hors-ligne, ou bien chaque noeud estime le temps d'inter-contact moyen avec ses voisins et diffuse cette information aux autres noeuds du réseau.

### Etapes:

Soit $M_1$, une matrice de taille nxn
$M_1 = <t_{ij}>$ (On initialise la matrice $M_1$ correspondant aux temps moyens d'inter-contacts pour les noeuds i et j)
k=1 on considère un seul relais, k correspond au relais mis en oeuvre dans le réseau
Faire à l'étape k+1 :

Pour chaque paire de noeuds (i,j) (avec 1<=i<=n, 1 <=j<=n, i≠j),

Faire $(M_{(k+1)}(i,j), V_i(d)^{k+1})$ = <u>Algorithme « Calcul à deux sauts »</u> (i, j, $<\lambda_{ij}>$, $M_k$) ; c'est-à-dire, estimer le délai à (k+1) sauts à partir de $<\lambda_{ij}>$ matrice inverse de la matrice des temps moyens d'intercontacts et des estimations de délais à k sauts présentes dans $M_k$,
stocker les délais inter-contacts estimés dans la matrice $M_{(k+1)}(i, j)$ et la liste des relais $V_i(d)^{k+1}$ ayant permis d'atteindre ces résultats la liste des relais correspondants.

Les étapes du procédé s'arrêtent lorsque l'on atteint un point dit fixe pour une valeur fixée de $M_k$

Par exemple le procédé peut être arrêté lorsque $M_k = M_{k+1}$. On a alors $M = M_k$ et pour tout couple i,d $V_i(d) = V_i(d)^k$.

*Résultat :* L'algorithme fournit en sortie :

Une matrice M contenant l'estimation du délai pour chaque paire de noeuds (i, j) i.e. le délai espéré pour un message allant du noeud i vers le noeud j en utilisant le processus de routage selon l'invention.

La liste des relais $V_i(d)$ correspondant à la liste des noeuds relais considérés au noeud i lorsqu'un message doit être transmis vers la destination d.

L'algorithme principal fait appel à un algorithme désigné « calcul à deux sauts » qui calcule pour chaque couple des noeuds source ou relais, destination (i,d) l'ensemble / de noeuds voisins de *i* dans le graphe de connectivité (i.e. les noeuds u avec qui $\lambda_{iu} \neq 0$) à utiliser comme relais pour atteindre d. Cette fonction fournit également une estimation du délai nommée $E_{i,d}(/)$ fonction de l'ensemble / retenu. Cette fonction peut être définie de plusieurs manières selon les objectifs à atteindre dans la mesure où la suite $M_k$ de l'algorithme « calcul du point fixe » converge.

La suite des matrices $M_k$ étant convergente, les délais d'acheminement décroissent en fonction du nombre d'itérations réalisées. Le délai minimum pour toutes les paires de noeuds est atteint au point fixe.

Une fois ceci fait, lorsqu'un noeud *i* doit relayer un message destiné à la destination d, il calcule ou récupère alors $V_i(d)$, l'ensemble des relais possibles à qui transmettre le message pour atteindre la destination *d.* Dès qu'il rencontre un noeud appartenant à $V_i(d)$ ' il lui transfert le message.

Selon une variante de réalisation, le procédé met en oeuvre une sous-fonction « calcul à deux sauts » qui permet de choisir l'ensemble des relais dans le cadre d'un processus de relais à deux sauts, ceci afin d'optimiser les délais.

On suppose que l'on peut relier un noeud s avec le noeud destinataire d en un temps moyen $e_{sd}$ (Obtenu à l'étape k de l'algorithme principal dans la matrice $M_k$ Ce temps peut être égal à l'infini).

On cherche ensuite à réduire ce délai en introduisant un relais supplémentaire r entre la source et la destination comme il est représenté à la figure 3. Ce relais est choisi dans une liste de candidats potentiels *I*, calculée de façon à diminuer le délai moyen entre s et d.

Sur la figure 3 :

  ◦ s représente le noeud source, d, le noeud destination,

  ◦ r un noeud voisin de s, relais potentiel du message émis depuis s vers d,

  ◦ $t_{sr}$ est le temps moyen d'intercontact entre noeuds s et r,

  ◦ $e_{rd}$ est le temps estimé à l'étape k pour la livraison du message depuis r vers d.

L'introduction de l'ensemble *I* des relais intermédiaires r conduit à une formulation du délai pouvant être espéré entre s et d, en utilisant l'ensemble de relais *I* au noeud s par la formule $E_{sd}(I)$ :

$$E_{sd}(I) = \frac{1}{\lambda_{sd} + \sum_{i \in I} \lambda_{si}} + \sum_{i \in I} \frac{\lambda_{si}}{\lambda_{sd} + \sum_{i \in I} \lambda_{si}} e_{id}$$

$E_{sd}(I)$ s'exprime en fonction des temps moyen d'inter-contacts $t_{sr}$ (et leurs inverses $\lambda_{sr}$) et des temps moyens d'inter-contacts $e_{rd}$ estimés à l'étape k de l'algorithme principal.

$E_{sd}(I)$ est la somme de deux termes :

• $\dfrac{1}{\lambda_{sd} + \sum_{i \in I} \lambda_{si}}$, le temps moyen d'attente pour s de rencontrer le premier des noeuds relais de *I* ou la destination d,

• $\sum_{i \in I} \dfrac{\lambda_{si}}{\lambda_{sd} + \sum_{i \in I} \lambda_{si}} e_{id}$, le temps d'attente moyen entre chaque noeud relais et la destination.

Dans ce calcul, on approche les temps d'inter-contacts par un processus exponentiel entre tous les noeuds i et j.

Pour trouver l'ensemble *I*, la méthode exhaustive consiste à explorer tous les cas de figure possibles pour minimiser $E_{sd}(I)$, ce qui correspond à $2^{d(i)}$ calculs, avec *d(i)* le degré du noeud *i* dans le graphe de connectivité. L'algorithme « calcul à deux sauts » exposé ci-dessous est en O(D), D étant le degré moyen des noeuds du réseau : le degré moyen est le nombre moyen de voisins de chaque noeud dans le graphe de connectivité. La notation en O(D) signifie que le nombre d'opérations pour effectuer le calcul est borné par D. et donne le résultat optimal lorsque les inter-contacts entre les noeuds *i* et *j* suivent une loi exponentielle (de paramètre $\lambda_{ij}$).

**Pré-requis :** chaque noeud *i* possède la connaissance de la matrice $<\lambda_{ij}>$, de taille *nxn (n* étant le nombre de noeuds), correspondant aux inverses des temps moyens d'inter-contact entre les noeuds *i* et *j*. De plus, chaque noeud possède la matrice $M_k <e_{ij}>$ des temps d'inter-contacts estimés à l'étape k de l'algorithme principal.

**Algorithme** « calcul à deux sauts » : $(s, d, <\lambda_{ij}>, <e_{ij}>)$

Pour la destination d, on considère la liste des temps moyens $e_{I, d,}$ I variant de 0 à n. On effectue un tri croissant de ces valeurs, et on obtient ainsi la liste L en ordre croissant :

$$L = e_{L0,d} < e_{L1,d} < e_{L0,d} < ... < e_{Ln,d}$$

Pour le noeud source s, on définit également l'ensemble des noeuds *I* des relais à trouver. On initialise *I* à l'ensemble vide, soit *I* = $\phi$

Une variable Result stocke la valeur courante du délai obtenue. En sortie de l'algorithme, elle fournit l'estimation du délai entre s et d avec le meilleur ensemble *I* des relais trouvé.

A l'initialisation, Result = 1 /$\lambda_{sd}$

Pour chaque noeud $L_I$ de la liste L, I variant de 0 à n

Si le noeud s voit le noeud $L_I$, et si le noeud $L_I$ voit la destination ($\lambda_{s,LI} \neq 0$ et $1/e_{LI,d} \neq 0$), ajouter le noeud $L_I$ à l'ensemble / et on teste la nouvelle valeur du délai avec cet ensemble / avec la formulation $E_{sd}(I) = \dfrac{1 + \sum_{i \in I} \lambda_{si} e_{id}}{\lambda_{sd} + \sum_{i \in I} \lambda_{si}}$,

le délai que l'on peut espérer entre s et d en utilisant l'ensemble de relais / au noeud s.

Si $E_{sd}(I)$ > Result (la nouvelle valeur est supérieure à la valeur courante) alors :

retirer le noeud $L_I$ de l'ensemble / (car il empire le résultat) et arrêter l'algorithme, l'ensemble / obtenu est optimal.

Sinon,
Faire Result = $E_{sd}(I)$, le noeud $L_I$ est accepté dans l'ensemble /, et cette valeur de délai devient la valeur minimale courante.

Return Result.

La figure 4 représente un exemple de transfert d'un noeud A vers un noeud D en deux sauts uniquement.

- $V_A(D)^2 = \{E,B\}$. A transmet le message à B car il rencontre B avant E.
- $V_B(D)^1 = \{D\}$. B attend de rencontrer D pour lui transférer le message.

Cette manière de procéder permet, notamment, de réduire le nombre d fois ou le message est transmis entre la source s et la destination d, le processus de routage décrit dans ce document peut s'appliquer avec limitations du nombre de sauts. Il suffit d'utiliser les ensembles $V_i(d)^k$ obtenus aux étapes intermédiaires dans l'algorithme principal pour effectuer le relayage en k sauts maximum. On utilise, l'ensemble $V_i(d)^{k-T}$ au noeud courant lorsque le message a déjà effectué T sauts.

Le procédé et le système décrits précédemment s'appliquent, par exemple, dans les domaines suivants :

dans le domaine civil, on envisage de construire des réseaux pair-à-pair basés sur les capacités sans-fils de courte portée (type wifi, Bluetooth, ou Zigbee) des terminaux mobiles (téléphones portables, des PDAs, etc...) Ces réseaux pair-à-pair urbains permettent ainsi aux utilisateurs de mettre en commun les ressources de leurs terminaux mobiles et de former ainsi un réseau virtuel (RTD).

Les applications envisagées incluent la messagerie, l'échange de contenu, la diffusion d'information localisée (à partir de bornes).

## Revendications

1.  Procédé de routage dans un réseau à connectivité intermittente **caractérisé en ce qu'**il comporte, pour déterminer les informations de routage, pour un acheminement défini de façon opportuniste :

    Pour un réseau comprenant un nombre n de noeuds,
    kmax étant le nombre de relais maximum à considérer dans l'acheminement, et $M_1$, une matrice de taille nxn

    - on initialise $M_1 = <t_{ij}>$ les estimations des temps moyens d'inter-contacts pour les noeuds i et j,
    - k+1 correspondant au nombre de relais considérés pour le routage, initialiser k=0, et faire à l'étape k :

    Pour chaque paire de noeuds (i,j) (avec 1<=i<=n, 1<=j<=n, i≠j),

    - estimer le délai à (k+1) sauts et la liste des relais correspondants à partir de $<\lambda_{ij}>$ matrice des inverses des temps moyens d'inter-contacts et des estimations de délais à k sauts présents dans $M_k$,
    - o stocker les délais d'inter-contacts estimés dans la matrice $M_{(k+1)}(i,j)$ et la liste des relais $V_i(d)^{k+1}$ correspondants, $(M_{(k+i)}(i,j), V_i(d)^{k+1})$

    où $V_i(d)^{k+1}$ correspond à la liste des noeuds relais considérés au noeud i lorsqu'un message doit être transmis vers la destination d, pour un nombre de relais k+1,
    Si k+1 = kmax, arrêter les étapes
    Si non, faire k=k+1

**2.** Procédé selon la revendication 1 **caractérisé en ce qu'**il comporte au moins les étapes suivantes :

o pour une destination d, considérer la liste des temps moyens <$e_{l,d}$> estimés à l'étape k dans $M_k$, l variant de 1 à n,
o effectuer un tri croissant des valeurs de ces temps moyens, L = $e_{L1,d}$ < $e_{L2,d}$ < ... < e $_{Ln,d}$, où L correspond à une liste en ordre croissant,
o pour un noeud source s, définir l'ensemble des noeuds / des relais à trouver, initialiser cet ensemble / = $\phi$
o soit Result la valeur correspondant à l'estimation du délai entre s et d avec le meilleur ensemble / trouvé,

A l'initialisation, Result = $1/\lambda_{sd}$
Pour chaque noeud $L_l$ de la liste L, l variant de 1 à n
Si le noeud s voit le noeud $L_l$, et si le noeud $L_l$ voit la destination ($\lambda_{s,Ll} \neq 0$ et $1/e_{Ll,d} \neq 0$), ajouter le noeud $L_l$ à l'ensemble / et tester la nouvelle valeur du délai avec cet ensemble / en utilisant

$$E_{sd}(I) = \frac{1 + \sum_{i \in I} \lambda_{si} e_{id}}{\lambda_{sd} + \sum_{i \in I} \lambda_{si}} \, ,$$

correspondant au délai que l'on peut espérer entre s et d en utilisant l'ensemble de relais / au noeud s.
Si $E_{sd}(I)$ > Result alors :

retirer le noeud $L_l$ de l'ensemble / et arrêter le déroulement des étapes , / est égal à l'ensemble optimal.
Sinon,
Faire Result = $E_{sd}(I)$, accepter le noeud dans l'ensemble /, et la valeur de délai devient la valeur minimale courante, stocker la valeur Result dans $M_{k+1}(s,d)$ et l'ensemble / dans $V_s(d)^{k+1}$.
Return Result.

**3.** Procédé selon la revendication 1 **caractérisé en ce que** le critère d'arrêt k+1 = kmax est remplacé par $M_k = M_{k+1}$.

**4.** Système de routage permettant d'obtenir des informations de routage **caractérisé en ce qu'**il comporte un ou plusieurs noeuds comportant au moins les éléments suivants :

o un module de Gestion de l'historique (1, 2, 3),
o un module Réception de messages de données (4), comprenant une mémoire tampon (6),
o Un module de décision de réexpédition (7) permettant de décider des messages qui sont transférés à un noeud lorsqu'il rentre en contact,
o Un module de Réexpédition (8, 9) pour assurer le transfert des messages vers les voisins,
o Un module de Calcul des informations de routage (10) adapté à exécuter les étapes du procédé selon la revendication 1.
o Un module d'Eligibilité (11) participant aux décisions de réexpedition prises dans le module de décision de réexpédition (7).

**Patentansprüche**

**1.** Routing-Verfahren in einem Netzwerk mit intermittierender Konnektivität, **dadurch gekennzeichnet, dass** es zum Bestimmen der Routing-Informationen für eine opportunistisch definierte Weiterleitung Folgendes beinhaltet:

für ein Netzwerk, das eine Anzahl n von Knoten umfasst,
wobei kmax die maximale in der Weiterleitung zu betrachtende Anzahl von Relais ist und $M_1$ eine Matrix der Größe nxn ist:

o Initialisieren $M_1$ = <$t_{ij}$> der Schätzungen der mittleren Inter-Kontakt-Zeiten für die Knoten i und j,
o wobei k+1 der für das Routing betrachteten Anzahl von Relais entspricht, Einleiten von k=0, und Durchführen in Schritt k:

für jedes Paar Knoten (i,j) (mit 1 <=i<=n, 1 <=j<=n, i≠j):

o Schätzen der Verzögerung bei (k+1) Sprüngen und der Liste von entsprechenden Relais auf der Basis von $<\lambda_{ij}>$ Matrix von Umkehrungen der mittleren Inter-KontaktZeiten und der Schätzungen von Verzögerungen bei k Sprüngen, die in $M_k$ vorhanden sind,

o Speichern der geschätzten Inter-Kontakt-Verzögerungen in der Matrix $M_{(k+1)}(i,j)$ und der Liste von entsprechenden Relais $V_i(d)^{k+1}$, $(M_{(k+1)}(i,j), V_i(d)^{k+1})$,

wobei $V_i(d)^{k+1}$ der Liste von betrachteten Relaisknoten zum Knoten i entspricht, wenn eine Nachricht zum Ziel d übertragen werden muss, für eine Anzahl von Verzögerungen k+1,

wenn k+1 = kmax, Stoppen der Schritte,

andernfalls sei k=k+1.

2. Verfahren nach Anspruch 1, **dadurch gekennzeichnet, dass** es wenigstens die folgenden Schritte beinhaltet:

o für ein Ziel d, Betrachten der Liste von mittleren Zeiten $<e_{e,d}>$, geschätzt in Schritt k in $M_k$, wobei I zwischen 1 und n variiert,

o Bewirken einer Sortierung mit ansteigenden Werten dieser mittleren Zeiten, $L = e_{L1,d} < e_{L2,d} < ... < e_{Ln,d}$, wobei L einer Liste in aufsteigender Reihenfolge entspricht,

o für einen Quellknoten s, Definieren der Gruppe von Knoten I von zu findenden Relais, Initialisieren dieser Gruppe $I = \phi$,

o Result sei der Wert entsprechend der Schätzung der Verzögerung zwischen s und d mit der besten gefundenen Gruppe I,

bei der Initialisierung, Result = $1/\lambda_{sd}$,

für jeden Knoten $L_I$ der Liste L, wobei I zwischen 1 und n variiert,

wenn der Knoten s den Knoten $L_I$ sieht und wenn der Knoten $L_I$ das Ziel ($\lambda_{s,LI} \neq 0$ und $1/e_{L1,d} \neq 0$) sieht, Hinzufügen des Knotens $L_I$ zum Satz I und Testen des neuen Wertes der Verzögerung mit diesem Satz I unter Ausnutzung von

$$E_{sd}(I) = \frac{1 + \sum_{i \in I} \lambda_{si} e_{id}}{\lambda_{sd} + \sum_{i \in I} \lambda_{si}},$$

entsprechend der Verzögerung, die zwischen s und d unter Ausnutzung des Satzes von Relais I am Knoten s erwartet werden kann;

wenn $E_{sd}(I) > $ Result ist, dann:

Abziehen des Knotens $L_I$ aus dem Satz I und Stoppen des Ablaufs der Schritte, I ist gleich dem optimalen Satz;

andernfalls

setzen Result = $E_{sd}(I)$, Akzeptieren des Knotens in dem Satz I, und der Verzögerungswert wird zum minimalen laufenden Wert, Speichern des Wertes Result in $M_{k+1}(s,d)$ und dem Satz I in $V_s(d)^{k+1}$;

Return Result.

3. Verfahren nach Anspruch 1, **dadurch gekennzeichnet, dass** das Stoppkriterium k+1 = kmax durch $M_k = M_{k+1}$ ersetzt wird.

4. Routing-System, mit dem Routing-Informationen erhalten werden können, **dadurch gekennzeichnet, dass** es einen oder mehrere Knoten umfasst, die wenigstens die folgenden Elemente beinhalten:

o ein Historienverwaltungsmodul (1, 2, 3),

o ein Datennachrichten-Empfangsmodul (4), das einen Pufferspeicher (6) umfasst,

o ein Neusendeentscheidungsmodul (7), mit dem eine Entscheidung über Nachrichten getroffen werden kann, die zu einem Knoten übertragen werden, wenn er in Kontakt kommt,

o ein Neusendemodul (8, 9) zum Gewährleisten der Übertragung von Nachrichten zu den Nachbarn,

o ein Routing-Informationenrechenmodul (10) zum Ausführen der Schritte des Verfahrens nach Anspruch 1;

o ein Eignungsmodul (11), das an den im Neusendeentscheidungsmodul (7) getroffenen Neusendeentscheidungen beteiligt ist.

**Claims**

1. A routing method in a network with intermittent connectivity, **characterized in that** it includes, to determine the routing information, for an opportunistically defined routing:

   for a network comprising a number n of nodes,
   kmax being the maximum number of relays to be considered in the routing, and $M_1$, a matrix of size nxn

   o the estimates of the average inter-contact times for the nodes i and j are initialized $M_1 = <t_{ij}>$,
   o k+1 corresponding to the number of relays considered for the routing, initialize k=0, and, in the step k:

   for each pair of nodes (i,j) (with 1<=i<=n, 1 <=j<=n, i≠j),

   o estimate the delay with (k+1) hops and the list of the corresponding relays from $<\lambda_{ij}>$ matrix of the inverses of the average inter-contact times and estimates of the delays with k hops present in $M_k$,
   o store the estimated inter-contact delays in the matrix $M_{(k+1)}(i,j)$ and the list of the corresponding relays $V_i(d)^{k+1}$, $(M_{(k+1)}(i,j), V_i(d)^{k+1})$

   where $V_i(d)^{k+1}$ corresponds to the list of the relay nodes considered at the node i when a message must be transmitted to the destination d, for a number of relays k+1,
   if k+1 = kmax, stop the steps,
   otherwise, do k=k+1

2. The method as claimed in claim 1, **characterized in that** it comprises at least the following steps:

   o for a destination d, consider the list of the average times $<e_{l,d}>$ estimated in the step k in $M_k$, l varying from 1 to n,
   o carry out an ascending sort of the values of these average times, $L = e L_{1,d} < e_{L2,d} < ... < e_{Ln,d}$, where L corresponds to a list in ascending order,
   o for a source node s, define the set of the nodes l of the relays to be found, initialize this set $l = \phi$
   o let result be the value corresponding to the estimate of the delay between s and d with the best set l found,

   on initialization, result= $1/\lambda_{sd}$
   for each node $L_l$ of the list L, l varying from 1 to n
   if the node s sees the node $L_l$, and if the node $L_l$ sees the destination ($\lambda_{s,Ll} \neq 0$ and $1/e_{Ll,d} \neq 0$), add the node $L_l$ to the set l and test the new value of the delay with this set l by using

   $$E_{sd}(I) = \frac{1 + \sum_{i \in I} \lambda_{si} e_{id}}{\lambda_{sd} + \sum_{i \in I} \lambda_{si}},$$

   corresponding to the delay that can be hoped for between s and d by using the set of relays l at the node s.
   If $E_{sd}(l) > result$, then:

   remove the node $L_l$ from the set l and stop the steps, l being equal to the optimum set.
   Otherwise,
   do result = $E_{sd}(l)$, accept the node in the set l, and the delay value becomes the current minimum value, store the result value in $M_{k+1}(s,d)$ and the set l in $V_s(d)^{k+1}$.
   Return result.

3. The method as claimed in claim 1, **characterized in that** the stop criterion k+1 = kmax is replaced by $M_k = M_{k+1}$.

4. A routing system making it possible to obtain routing information, **characterized in that** it includes one or more nodes with at least the following elements:

   o a history management module (1, 2, 3),
   o a data message reception module (4), comprising a buffer memory (6),
   o a forwarding decision module (7) making it possible to decide which messages are transferred to a node when it comes back into contact,
o a forwarding module (8, 9) for transferring the messages to the neighbors,
o a routing information computation module (10) suitable for executing the steps of the method as claimed in claim 1,

an eligibility module (11) participating in the forwarding decisions taken in the forwarding decision module (7).

FIG.1

FIG.3

FIG.4

FIG.5

**Gestion de l'historique**

Mise à jour historique  2

Propagation historique  1

5  Applica-tions

Historique  3

6

4  Réception Messages

Mémoire tampon

Calcul des informations de routage  10

Eligibilité  11

Décision de réexpédition  7

**Réexpédition**

Listes d'attentes  8

Fonction transfert  9

# FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. LINDGREN ; A. DORIA ; O. SCHELEN.** Probabilistic routing in intermittently connected networks. *Proc. SAPIR,* 2004
- **J. BURGESS ; B. GALLAGHER ; D. JENSEN ; B. N. LEVINE.** MaxProp: Routing for Vehicle-Based Disruption-Tolerant Networks. *Proc. Infocom,* 2006
- **S. JAIN ; K. FALL ; R. PRATA.** Routing in a Delay Tolerant Network. *Proc. SigComm,* 2004
- **V. CONAN ; J. LEGUAY ; T. FRIEDMAN.** *The heterogeneity of inter-contact time distributions : its importance for routing in delay tolerant networks*
- **M. GROSSGLAUSER ; D. TSE.** Mobility increases the capacity of ad-hoc wireless networks. *Transactions on Networking,* Août 2002, vol. 10 (4), 477-486